(19)

Europäisches
Patentamt
European
Patent Office
Office européen
des brevets

(11) **EP 4 056 952 A1**

(12) **EUROPEAN PATENT APPLICATION**
published in accordance with Art. 153(4) EPC

(43) Date of publication:
**14.09.2022  Bulletin 2022/37**

(21) Application number: **20894727.5**

(22) Date of filing: **02.11.2020**

(51) International Patent Classification (IPC):
***G01C 21/32*** (2006.01)

(86) International application number:
**PCT/CN2020/125837**

(87) International publication number:
**WO 2021/103945 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.11.2019  CN 201911185884**

(71) Applicant: **GUANGDONG OPPO MOBILE
TELECOMMUNICATIONS
CORP., LTD.**
**Dongguan, Guangdong 523860 (CN)**

(72) Inventor: **PENG, Dongwei**
**Dongguan, Guangdong 523860 (CN)**

(74) Representative: **Rossi, Ugo**
**Bugnion S.p.A.**
**Viale Lancetti, 17**
**20158 Milano (MI) (IT)**

(54) **MAP FUSION METHOD, APPARATUS, DEVICE, AND STORAGE MEDIUM**

(57)    Provided are a map fusion method, apparatus, device, and storage medium, said method comprising: according to obtained search guidance information, determining the search area of a first map from at least two maps currently displayed, the first map comprising a plurality of first sample points (101); from among at least two maps other than the first map, determining a second map (102); determining, in the second map, a corresponding area of the search area, the second map comprising a plurality of second sample points (103); from the second sample points of the corresponding area, determining a target point that matches the attribute information of the first sample point in the search area so as to obtain a matching pair of sample points, the sample point matching pair comprising a target point and a first sample point which matches the target point (104); according to the obtained sample point matching pair, fusing the first map and the second map to obtain a target fusion map (105).

determining, based on obtained search guidance information, a search area of a first map from currently displayed at least two maps, and the first map including first sampling points — 101

determining a second map from the at least two maps excluding the first map — 102

determining a corresponding area of the search area in the second map, and the second map including second sampling points — 103

determining target points, from the second sampling points in the corresponding area, having matched attribute information with the first sampling points in the search area, to obtain sampling point matching pairs, and each of the sampling point matching pairs including one of the target points and the first sampling point matched with the one of the target points — 104

fusing, based on the obtained sampling point matching pairs, the first map and the second map to obtain a target fusion map — 105

FIG. 1

EP 4 056 952 A1

**Description**

CROSS-REFERENCE TO RELATED DISCLOSURE

The present disclosure claims priority from Chinese patent disclosure No. 201911185884.1, filed on November 27, 2019, which is hereby incorporated herein by reference in its entirety for all purposes.

TECHNICAL FIELD

The present disclosure relates to electronic technologies, and in particularly, related to but is not limited to map fusion method and apparatus, device and storage medium.

BACKGROUND

At present, an environment map can be built through visual information. In a process of building the environment map, a demand of map fusion is inevitable. For example, in an application scenes where multiple person or machines cooperate to complete map-building, it is necessary to fuse a plurality of local maps into one map. However, a computation amount to realize the map fusion is very large, resulting in poor real-time performance of the map fusion.

SUMMARY

In view of this, embodiments of the present disclosure provide map fusion method and apparatus, device and storage medium, which can improve the real-time performance of map fusion. The technical solutions of the embodiments of the present disclosure are realized as follows.

In a first aspect, an embodiment of the present disclosure provides a map fusion method, the method includes: determining, based on obtained search guidance information, a search area of a first map from currently displayed at least two maps; the first map including first sampling points; determining a second map from the at least two maps excluding the first map and determining a corresponding area of the search area in the second map; the second map including second sampling points; determining target points, from the second sampling points in the corresponding area, having matched attribute information with the first sampling points in the search area, to obtain sampling point matching pairs, each of the sampling point matching pairs includes one of the target points and the first sampling point matched with the one of the target points; and fusing, based on the obtained sampling point matching pairs, the first map and the second map to obtain a target fusion map.

In an embodiment, the determining a second map from the at least two maps excluding the first map and determining a corresponding area of the search area in the second map, includes: determining, based on the search guidance information, the corresponding area in the second map from the at least two maps excluding the first map.

In an embodiment, the search guidance information includes a first touch area corresponding to a touch operation; and the determining, based on obtained search guidance information, a search area of a first map from currently displayed at least two maps, includes: displaying the at least two maps in a map display area; receiving the touch operation in the map display area; determining, based on the first touch area corresponding to the touch operation, the first map from the at least two maps; and determining, based on a position of the first touch area on the first map, the search area.

In an embodiment, the determining, based on a position of the first touch area in the first map, the search area, includes: determining an area corresponding to the first touch area on the first map as the search area.

In an embodiment, the search guidance information includes a second touch area corresponding to the touch operation; and the determining a second map from the at least two maps excluding the first map and determining a corresponding area of the search area in the second map includes: determining, based on the second touch area corresponding to the touch operation, the second map from the at least two maps excluding the first map; and determining, based on a position of the second touch area on the second map, the corresponding area.

In an embodiment, the search guidance information includes a voice instruction; and the determining, based on obtained search guidance information, a search area of a first map from currently displayed at least two maps includes: displaying the at least two maps and labeling information in a map display area; the labeling information being configured to label different display sub areas; receiving the voice instruction; determining, based on a first display sub area labeled by labeling information in the voice instruction, the first map from the at least two maps; and determining, based on a position of the first display sub area on the first map, the search area.

In an embodiment, the search guidance information includes gesture information; and the determining, based on obtained search guidance information, a search area of a first map from currently displayed at least two maps includes: displaying the at least two maps in a map display area; recognizing the gesture information contained in a gesture operation; and determining, based on the gesture information and the map display area, the search area of the first map from the at least two maps.

In an embodiment, the search guidance information includes ocular feature information; and the determining, based on obtained search guidance information, a search area of a first map from currently displayed at least two maps includes: displaying the at least two maps in a map display area; obtaining the ocular feature information of a user; determining, based on the ocular feature information, a gaze area of eyeballs of the user on the map display area; determining, based on the gaze area, the first map from the at least two maps; and determining, based on a position of the gaze area on the first map, the search area.

In an embodiment, the fusing, based on the obtained sampling point matching pairs, the first map and the second map to obtain a target fusion map, includes: preliminarily fusing the first map with the second map to obtain an initial fusion map; and fusing attribute information of each of the sampling point matching pairs in the initial fusion map into attribute information of one sampling point, thereby obtaining the target fusion map.

In an embodiment, the preliminarily fusing the first map with the second map to obtain an initial fusion map, includes: converting local coordinates of the first sampling points in the first map to a global coordinate system to obtain initial global coordinates of the first sampling points; converting local coordinates of the second sampling points in the second map to the global coordinate system to obtain initial global coordinates of the second sampling points; and combining the initial global coordinates of the first sampling points and the initial global coordinates of the second sampling points to obtain the initial fusion map.

In an embodiment, the preliminarily fusing the first map with the second map to obtain an initial fusion map, includes: determining a coordinate conversion relationship between a reference coordinate system of the first map and a reference coordinate system of the second map; converting, based on the coordinate conversion relationship, local coordinates of the first sampling points in the first map into initial global coordinates, by taking the reference coordinate system of the second map as a global coordinate system; and fusing the initial global coordinates of the first sampling points into the second map to obtain the initial fusion map.

In an embodiment, the fusing attribute information of each of the sampling point matching pairs in the initial fusion map into attribute information of one sampling point, thereby obtaining the target fusion map, includes: optimizing the initial global coordinates of the first sampling point in each of the sampling point matching pairs to obtain target global coordinates; and fusing global coordinates of each of the target points in the initial fusion map and the target global coordinates of the matched first sampling point into global coordinates of the one sampling point, and thereby obtaining the target fusion map.

In an embodiment, the optimizing the initial global coordinates of the first sampling point in each of the sampling point matching pairs to obtain target global coordinates, includes: determining, based on the initial global coordinates of the first sampling point and the initial global coordinates of the matched target point, a reprojection error of the first sampling point; and iteratively adjusting the initial global coordinates of the first sampling point in each of the sampling point matching pairs until the reprojection error of the first sampling point is less than or equal to a specified threshold, and determining inputted global coordinates of the first sampling point in a last iterative adjusting as the target global coordinates.

In a second aspect, an embodiment of the present disclosure provides a map fusion apparatus, including: a determining module, configured to determine, based on obtained search guidance information, a search area of a first map from currently displayed at least two maps; the first map including first sampling points; determine a second map from the at least two maps excluding the first map, determining a corresponding area of the search area in the second map; and the second map including second sampling points; a matching module, configured to determine target points, from the second sampling points in the corresponding area, having matched attribute information with the first sampling points in the search area, to obtain sampling point matching pairs, and each of the sampling point matching pairs including one of the target points and the first sampling point matched with the one of the target points; and a fusing module, configured to fuse, based on the obtained sampling point matching pairs, the first map and the second map to obtain a target fusion map.

In a third aspect, an embodiment of the present disclosure provides an electronic device, including: a memory and a processor, the memory is stored with a computer program executable by the processor, and the processor is configured to, when executes the computer program, implement the map fusion method according to any one of the embodiments of present disclosure.

In a fourth aspect, an embodiment of the disclosure provides a non-transitory computer readable storage medium, the non-transitory computer readable storage medium is stored with a computer program, and the computer program is configured to, when being executed by a processor, implement the map fusion method according to any one of the embodiments of present disclosure.

In a fifth aspect, an embodiment of the present disclosure provides a chip, including: a processor configured to call and run a computer program from a memory to make a device installed with the chip execute the map fusion method according to any one of the embodiments of present disclosure.

In the embodiments of the present disclosure, the search area of the first map is determined from the at least two currently displayed maps based on the obtained search guidance information; the first map includes the first sampling points; the second map is determined from the at least two maps excluding the first map, and the corresponding area of the search area in the second map is determined; the second map includes the second sampling points; based on this, the target points having matched attribute information with the first sampling points in the search area are searched from the second sampling points of some areas (i.e. the corresponding area) in the second map; in this way, a search range can be greatly reduced, thereby to reduce the calculation amount for finding the matched target points, and improve the real-time performance of the map fusion.

BRIEF DESCRIPTION OF THE DRAWINGS

The drawings herein are incorporated into the specification and form a part of the specification. These drawings show embodiments consistent with the present disclosure and are used together with the specification to explain the technical solutions of the present disclosure.

FIG. 1 illustrates a schematic flowchart of a map fusion method according to an embodiment of the present disclosure.
FIG. 2 illustrates a schematic view of a map display area according to an embodiment of the present disclosure.
FIG. 3 illustrates a schematic view of another map display area according to an embodiment of the present disclosure.
FIG. 4 illustrates a schematic view of still another map display area according to an embodiment of the present disclosure.
FIG. 5 illustrates a schematic flowchart of another map fusion method according to an embodiment of the present disclosure.
FIG. 6 illustrates a schematic structural view of a map fusion apparatus according to an embodiment of the present disclosure.
FIG. 7 illustrates a schematic flowchart of a hardware entity of an electronic device according to an embodiment of the present disclosure.

DETAILED DESCRIPTION OF EMBODIMENTS

In order to make purposes, technical solutions and advantages of embodiments of the present disclosure clearer, the specific technical solutions of the present disclosure will be further described in detail below in combination with the accompanying drawings in the embodiments of the present disclosure. The following embodiments are used to illustrate the present disclosure, but are not used to limit the scope of the present disclosure.

Unless otherwise defined, all technical and scientific terms used herein have the same meanings as those commonly understood by those skilled in the art of the present disclosure. The terms used herein are only for the purposes of describing the embodiments of the present disclosure and are not intended to limit the present disclosure.

In the following description, reference is made to "some embodiments", which describe a subset of all possible embodiments, but it is understood that "some embodiments" may be the same or different subsets of all possible embodiments, and may be combined with each other without conflict.

It should be noted that the terms "first\second\third" involved in the embodiments of the present disclosure is to distinguish similar or different objects and does not represent a specific order for objects. It is understandable that "first\second\third" can exchange a specific order or order if allowed, thus the embodiments of the present disclosure described here can be implemented in an order other than those illustrated or described here.

Embodiments of the present disclosure provide a map fusion method, which can be applied for electronic devices, the electronic devices can be mobile phones, tablet computers, laptops, desktop computers, robots, unmanned aerial vehicles (UAVs) and other devices with information processing capability. The function realized by the map fusion method can be realized by calling program codes by a processor in the electronic device. Of course, the program codes can be saved in a non-transitory computer storage medium. It can be seen that the electronic device at least includes the processor and the storage medium.

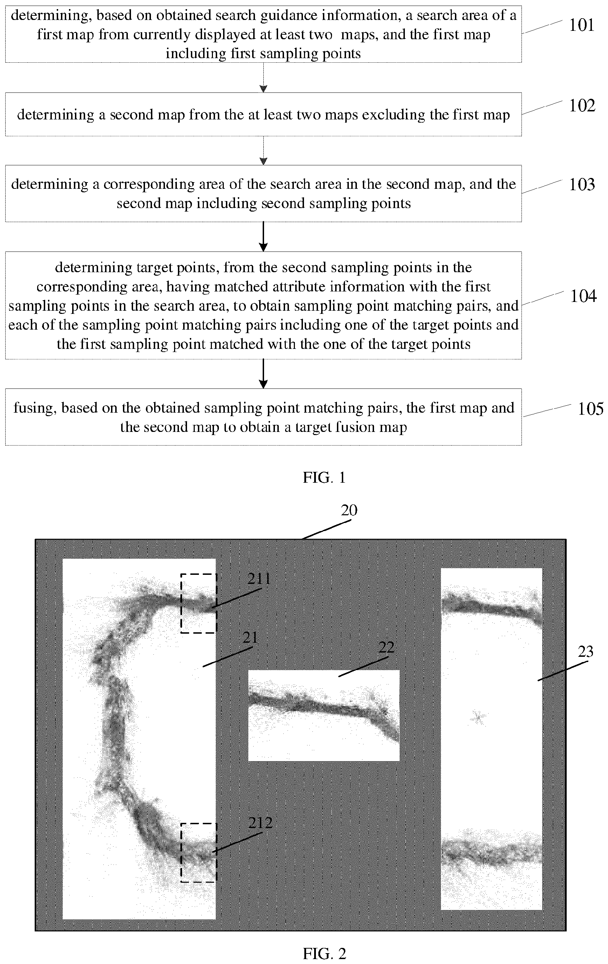

FIG. 1 illustrates a flowchart of a map fusion method according to an embodiment of the present disclosure. As shown in FIG. 1, the method may begin from block 101 to block 105.

At block 101, determining, based on obtained search guidance information, a search area of a first map from currently displayed at least two maps, and the first map including first sampling points.

In some embodiments, the search guidance information are configured at least to guide the electronic device to determine the first map to be fused from the currently displayed maps, and to determine the search area of the first map. In some embodiments, the search guidance information are further configured to guide the electronic device to determine a second map to be fused from remaining maps and determine an area corresponding to the search area in the second map.

In some embodiments, the search guidance information are determined by the electronic device based on an instruction entered by a user. For example, the user inputs the instruction such as a touch operation, a voice instruction, a gesture operation or an eye operation into the electronic device, and the electronic device obtains corresponding the search guidance information based on the received input instruction. That is, the search guidance information can be various. For example, the search guidance information may be one of the following information: a first touch area and/or a second touch area corresponding to the touch operation, voice information, gesture information, and ocular feature information.

It should be noted that a method in which the electronic device obtains the at least two maps is not limited. The electronic device can collect image data in different physical spaces to generate maps corresponding to the physical spaces. The electronic device can also download generated maps from other electronic devices. For example, the at least two maps may include map 1, map 2 and map 3. As shown in Table 1, the map 1 is three-dimensional point cloud data generated by collecting image data in a physical space 1 by the electronic device, the map 2 is three-dimensional point cloud data generated by collecting image data in a physical space 2 by an electronic device 2, and the map 3 is three-dimensional point cloud data generated by collecting image data in a physical space 3 by an electronic device 3. There are overlapping areas between at least two physical spaces.

Table 1

| Map | Device for generating map | Physical space corresponding to map |
|---|---|---|
| map 1 | the electronic device | physical space 1 |
| map 2 | electronic device 2 | physical space 2 |
| map 3 | electronic device 3 | physical space 3 |

Based on this, the electronic device can obtain the map 2 and the map 3 respectively from the electronic devices 2 and 3, determine, based on the obtained search guidance information, the first map to be fused from the maps 1 to 3, and determine the search area of the first map.

At block 102, determining a second map from the at least two maps excluding the first map.

It can be understood that when the at least two maps are two maps, after determining the first map, the electronic device can automatically default a remaining map to the second map, and the electronic device will fuse the two maps.

When the at least two maps are three or more maps, the electronic device can not only automatically determine the second map, but also determine the second map based on the search guidance information. A method of automatically determining the second map, for example, determining sampling point matching pairs between each of other maps except the first map and the search area of the first map, and then determining the other map with the largest number of the sampling point matching pairs as the second map.

However, this method of automatically determining the second map requires a large calculation amount because it is necessary to determine a similarity (e.g., Euclidean distance) between the first sampling point in the search area and each sampling point in other maps. For example, the at least two maps include map 1, map 2 and map 3, the map 1 is the first map, assuming that the search area of the first map includes 1000 number of first sampling points, the map 2 includes $10^5$ number of sampling points, and the map 3 includes $10^7$ number of sampling points. Then, it is necessary to determine a Euclidean distance between the ith first sampling point in the 1000 number of first sampling points and each sampling point in the map 2, and determine, based on each Euclidean distance, the sampling point matched with the ith first sampling point in the map 2. In this way, to search the sampling point matched with each first sampling point in the map 2, it is necessary to calculate the Euclidean distance for $1000 \times 10^5$ times. Similarly, to search the sampling point matched with each first sampling point in the map 3, it is necessary to calculate the Euclidean distance for $1000 \times 10^5$ times.

Relatively speaking, a method of determining the second map based on the search guidance information is relatively simple. For example, when the search guidance information includes a first touch area corresponding to a touch operation, the electronic device determines the search area based on a position of the first touch area on the first map.

At block 103, determining a corresponding area of the search area in the second map, and the second map including second sampling points.

It can be understood that the corresponding area is an area in the second map similar to or the same as the search area in the first map. When the second map is automatically determined, the electronic device can determine the corresponding area based on a set of sampling point matching pairs between the search area and the second map. For example, the sampling points in the second map that match with the first sampling points in the search area are determined as the sampling points in the corresponding area.

When the second map is determined based on the search guidance information, the electronic device can determine the corresponding area based on the search guidance information. For example, when the search guidance information includes a second touch area corresponding to the touch operation, the electronic device determines the corresponding area based on a position of the second touch area on the second map.

At block 104, determining target points, from the second sampling points in the corresponding area, having matched attribute information with the first sampling points in the search area, to obtain sampling point matching pairs, and each of the sampling point matching pairs including one of the target points and the first sampling point matched with the one of the target points.

It can be understood that the matched target point is the sampling point having attribute information that is the same or similar to the attribute information of the first sampling point, in the second sampling points. For example, the target point is a point with a Euclidean distance between the attribute information of the second sampling point in the corresponding area and the attribute information of the first sampling point being less than a specific threshold, or a point with the smallest Euclidean distance. The attribute information includess at least coordinate information. In some embodiments, the attribute information may further include map feature information.

At block 105: fusing, based on the obtained sampling point matching pairs, the first map and the second map to obtain a target fusion map.

It can be understood that a fusion between two maps is mainly to fuse matched sampling points (that is, two sampling points with the same or similar attributes) between the two maps into one point, while the other points are simply combined after being unified into a same coordinate system. For example, the first sampling point and the target point matched with the first sampling point are called a sampling point matching pair. Supposing that the first sampling points belonging to the sampling point matching pairs are A1 to A100, and the remaining sampling points in the first map are A101 to a10001. The second sampling points belonging to the sampling point matching pairs are B 1 to B 100, and the remaining sampling points in the second map are B 101 to B 100001. During the map fusion, an obtained target fusion map includes: attribute information of one point fused by each of the sampling point matching pairs, and attribute information of the points A101 to A10001 and B101 to B 100001 after being unified into the same coordinate system.

In the embodiment of the present disclosure, there are many methods to fuse the attribute information of the target point with the attribute information of the matched first sampling point. For example, taking the attribute information including three-dimensional coordinates as an example, after converting the three-dimensional coordinates of two matched points to the same coordinate system, taking a mean or a median of coordinates of the two matched points as coordinates of a fused point. For example, after coordinates of matched points A and B are converted to the same coordinate system, the corresponding coordinates are $A(x_a, y_a, z_a)$ and B $(x_b, y_b, z_b)$ respectively. After fusing into one point, the coordinates of the one point is AB $(\frac{x_a + x_b}{2}, \frac{y_a + y_b}{2}, \frac{z_a + z_b}{2})$.

In the embodiment of the present disclosure, when fusing the first map and the second map, the search area of the first map is determined based on the obtained search guidance information, and searching for matched sampling points between some area (i.e., the search area) of the first map and some area (i.e., the corresponding area) of the second map. Therefore:

on one hand, because a range of searching sampling point matching pairs is greatly reduced, the calculation amount in the searching can be reduced, and a processing speed of the map fusion can be improved, thus the map fusion method described in the embodiment of the present disclosure can be implemented not only on servers with large processors or desktop computers, but also on mobile devices such as mobile phones or tablets with small processors;

on another hand, an application scene of the map fusion can be expanded, which can not only be applicable to an Augmented Reality (AR) scene of multi-person map-building, but also realize map-building and map fusion in an area where access to the Internet is prohibited or in a private area;

on still another hand, the real-time performance of the map fusion can be ensured, thus the map fusion can be carried out not only when building maps offline, but also when positioning online; and

on still another hand, in the embodiment of the present disclosure, the electronic device can obtain the search guidance information inputted by the user, indicating that there are two maps that can be fused in at least two currently displayed maps, thus the fusion process will not fail. If the search guidance information is not introduced, that is, the electronic device automatically determines two maps with overlapping areas from the at least two maps. No matter whether there are two maps that can be fused in the displayed maps, the electronic device needs to go through the automatic search process, in this way, when there are no two maps that can be fused, it will lead to unnecessary computational overhead.

In some embodiments, for the above blocks 102 and 103, that is, determining a second map from the at least two maps excluding the first map, and determining a corresponding area of the search area in the second map, the electronic device can determine, based on the search guidance information, the corresponding area in the second map from the at least two maps excluding the first map.

It can be understood that generally, before the map fusion, two maps (i.e., the first map and the second map) with overlapping areas from a plurality of maps are determined, and the overlapping areas of the two maps are fused, the processing is very complex, especially in the process of determining the two maps that can be fused. This is because the electronic device needs to match the maps in pairs. In the process of the matching, it is necessary to calculate a Euclidean distance between each sampling point in the map and each sampling point in another map, and the calculation cost is huge.

For example, the at least two maps include map A, map B, map C and map D, the map A includes $10^6$ number of sampling points, the map B includes $10^7$ number of sampling points, the map C includes $10^8$ number of sampling points and the map D includes $10^5$ number of sampling points. The electronic device automatically determines two maps with overlapping areas. It is necessary to determine sampling point matching pairs between the map A and the map B, the map A and the map C, the map A and the map D, the map B and the map C, the map B and the map D, and the map C and the map D. in this way, it is necessary to calculate the European distance for ($10^6 \times 10^7 + 10^6 \times 10^9 + 10^6 \times 10^5 + 10^7 \times 10^8 + 10^7 \times 10^5 + 10^8 \times 10^5$) times, which shows that the calculation amount is very large. Moreover, even if there is no map that can be fused in maps A to D, the electronic device needs to process the above calculation process, resulting in unnecessary calculation overhead.

In the embodiment of the present disclosure, the electronic device directly determines, based on the search guidance information, the second map to be fused from the at least two maps excluding the first map, and further determines the corresponding area on the second map. In this way, the calculation amount of searching for the second map to be fused by the electronic device can be greatly reduced, and the calculation amount of determining the sampling point matching pairs can be reduced. Moreover, the electronic device can obtain the search guidance information input by the user, indicating that there are two maps that can be fused in the at least two maps currently displayed. Therefore, the fusion process will not fail and will not experience unnecessary computing overhead.

For example, the at least two maps include map A, map B, map C and map D described in the above example. Based on the search guidance information, it can be directly determined that the first map and the second map to be fused are the map B and the map D respectively, and the search area on the map B and the corresponding area on the map D can also be determined. Assuming that the number of sampling points in the search area on the map B is $10^3$ and the number of sampling points in the corresponding area on the map D is $1.5 \times 10^3$, the electronic device only needs to calculate the Euclidean distance for ($10^3 \times 1.5 \times 10^3$) times. It can be seen that the calculation amount is very small compared with the above method of automatically determining two maps with overlapping areas. In this way, the computational overhead of the map fusion can be greatly reduced, thereby to effectively improve the real-time performance of the map fusion.

As described in the above embodiment, the search guidance information may include a first touch area obtained based on a touch operation input by a user in the electronic device. Based on this, an embodiment of the present disclosure provides another map fusion method, which can begin from block 201 to block 208.

At block 201, at least two maps are displayed in a map display area.

The at least two maps can be generated by a same electronic device or different electronic devices. For example, a plurality of electronic devices build maps in different physical spaces in parallel. A purpose of displaying the at least two maps in the map display area is to enable the user to point out which areas of the two maps overlap or are similar.

At block 202, a touch operation is received in the map display area.

In the embodiment of the present disclosure, a type of the touch operation is not limited, and the type of the touch operation can be various. The touch operation can be single finger touch, multi finger touch, single finger sliding, double finger kneading, double finger sliding on two sides, etc. The user can perform the above touch operation in the display area of the map to inform the electronic device which area is the search area on the map. In addition, the user can also perform double finger kneading or multi finger touch on the map display area to tell the electronic device which two maps to be fused.

At block 203, determining, based on a first touch area corresponding to the touch operation, the first map from the at least two maps.

At block 204, determining, based on a position of the first touch area on the first map, the search area.

For example, as shown in FIG. 2, map 21, map 22 and map 23 are displayed on a map display area 20 of the electronic device. When the user double finger touch areas 211 and 212 of the map 21, the electronic device can determine that the map receiving the touch operation is the map 21 based on the touch area, thus the map 21 is determined as the first map to be fused, and it is determined that the two areas touched are the search area of the first map.

At block 205, determining a second map from the at least two maps excluding the first map.

At block 206, determining a corresponding area of the search area in the second map, and the second map including second sampling points.

As described in the above embodiment, the electronic device can automatically determine the second map and the corresponding area in the second map, and can also determine the second map based on the search guidance information, thereby to determine the corresponding area in the second map. The search guidance information can further include a second touch area corresponding to the touch operation. When realizing the block 205 and block 206, the electronic device can determine, based on the second touch area corresponding to the touch operation, the second map from the at least two maps excluding the first map, and determining the corresponding area based on the position of the second touch area on the second map.

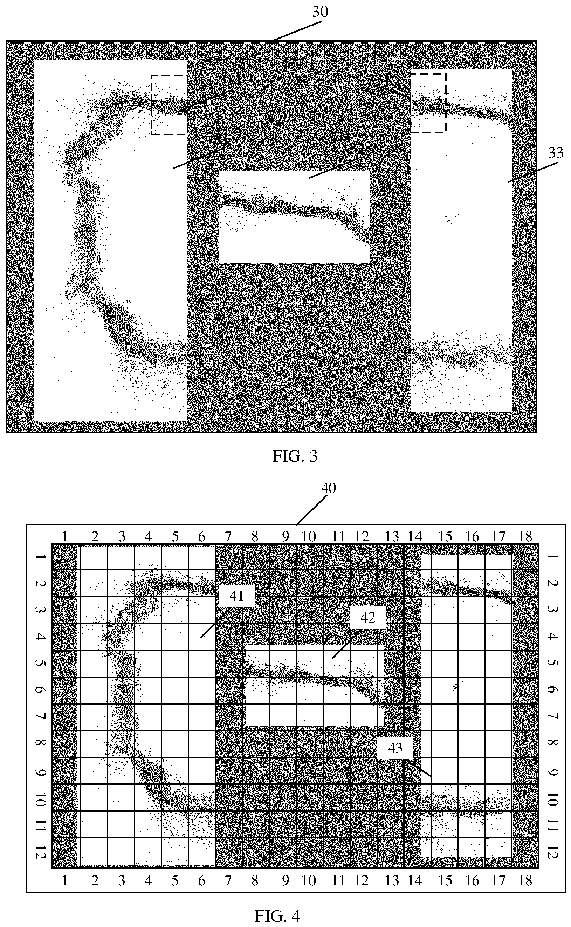

For example, as shown in FIG. 3, map 31, map 32 and map 33 are displayed in a map display area 30 of the electronic device. When the user double fingers knead an area 311 of the map 31 and an area 331 of the map 33, the electronic device can determine maps receiving the touch operation as the map 31 and the map 33 based on the touch areas. Therefore, the map 31 and the map 33 are determined as the first map and the second map to be fused respectively, and the area 311 is determined, based on a position of the first touch area on the map 31, as the search area; and the area 331 is determined, based on a position of the second touch area on the map 33, as the corresponding area.

At block 207, determining target points, from the second sampling points in the corresponding area, having matched attribute information with the first sampling points in the search area, to obtain sampling point matching pairs, and each of the sampling point matching pairs including one of the target points and the first sampling point matched with the one of the target points.

In some embodiments, the electronic device determines a similarity between attribute information of the ith first sampling point in the search area and attribute information of each second sampling point in the corresponding area to obtain a similarity set, where i is an integer greater than 0. The second sampling points in the similarity set whose the similarity meets specific conditions are determined as the target points.

The searching for sampling point matching pairs is realized through the block 207. The advantages are: on the one hand, the similarity between the sampling points in the search area of the first map and each sampling point in the corresponding area can be calculated without traversing each sampling point in the first map, thereby to reduce the calculation amount for searching for the sampling point matching pairs; on the other hand, it is sufficient to determine the similarity between each sampling point in the corresponding area of the second map without traversing each sampling point in the second map, thereby to further reduce the calculation amount for searching for the sampling point matching pairs.

At block 208: fusing, based on the obtained sampling point matching pairs, the first map and the second map to obtain a target fusion map.

In the embodiment of the present disclosure, a method for obtaining the search guidance information is provided, that is, the first touch area is obtained based on the touch operation inputted by the user on the electronic device, thereby to determine the first map to be fused and the search area on the first map, compared with other obtaining methods, this method has a simple implementation. When the touch area corresponding to the touch operation is detected, the search area on the first map and the first map can be determined. Therefore, the processing complexity of the map fusion can be further reduced, thereby to improve the processing efficiency of the map fusion.

As described in the above embodiment, the search guidance information can include a voice instruction inputted by the user. Based on this, an embodiment of the present disclosure provides another map fusion method, which can begin from block 301 to block 308.

At block 301, at least two maps and labeling information are displayed in a map display area, and the labeling information are configured to label different display sub areas.

In some embodiments, the electronic device may divide the map display area into a plurality of grids in advance, and each of the plurality of grids is a display sub area. The labeling information can be coordinate information of a key sampling point on the map area covered by the grid, and each grid corresponds to at least one labeling information.

In another embodiment, the labeling information can include custom grid identifications (ID), and each of the grid IDs has a corresponding relationship with a map area covered by the corresponding grid. For example, the grid ID includes position information of the grid in the map display area.

At block 302, receiving the voice instruction.

At block 303, a first map is determined based on a first display sub area labeled by labeling information in the voice instruction from the at least two maps.

In some embodiments, the voice instruction may carry one or more different labeling information.

At block 304, determining, based on a position of the first display sub area on the first map, a search area.

At block 305, determining a second map from the at least two maps excluding the first map.

At block 306, determining a corresponding area of the search area in the second map, and the second map including second sampling points.

Similar to the above embodiment, the electronic device can not only automatically determine the second map and the corresponding area of the search area in the second map, but also determine the second map and the corresponding area of the second map based on the plurality of labeling information carried by the voice instruction.

In some embodiments, the electronic device can determine the second map from the other maps based on a second display sub area labeled by the labeling information in the voice instruction, and determine the corresponding area based on a position of the second display sub area on the second map.

It can be understood that, the user can input the voice instruction based on corresponding relationships among the at least two displayed maps and the labeling information to command the electronic device to perform the map fusion. For example, as shown in FIG. 4, map 41, map 42 and map 43 are displayed in a map display area, and an abscissa axis and an ordinate axis of the grids are displayed. The user can indicate which areas in the maps are similar based on the coordinate values on the abscissa axis and the ordinate axis. For example, a voice instruction is "grid (6, 2), grid (14, 2) and grid (15, 2) are overlapping areas". At this time, after recognizing the labeling information carried in the voice instruction, the electronic device determines the corresponding map 41 as the first map to be fused based on a grid area labeled by the grid (6, 2), and determines the search area based on a position of the grid (6, 2) on the map 41. The electronic device also determines the corresponding map 43 as the second map to be fused based on a grid area labeled by the grid (14, 2) and the grid (15, 2), and determines the corresponding area based on a position of the grid (14, 2) and the grid (15, 2) on the map 43.

At block 307, determining target points, from the second sampling points in the corresponding area, having matched attribute information with the first sampling points in the search area, to obtain sampling point matching pairs, and each of the sampling point matching pairs including one of the target points and the first sampling point matched with the one of the target points.

At block 308, fusing, based on the obtained sampling point matching pairs, the first map and the second map to obtain a target fusion map.

In the embodiment of the present disclosure, another method to obtain the search guidance information is provided, that is, determining the search area of the first map and the first map based on the labeling information carried in the voice instruction inputted by the user, compared with other obtaining methods, this method can guide the electronic device for the map fusion without user touch operation. In this way, the map fusion method can be applied to electronic devices without touch screen or electronic devices with touch screen failure, thereby to expand the application scene of the map fusion and reduce the implementation cost of the map fusion.

As described in the above embodiment, the search guidance information can include gesture information determined based on a gesture operation of a user. Based on this, an embodiment of the present disclosure provides another map fusion method, which can begin from block 401 to block 407.

At block 401, displaying at least two maps in a map display area.

At block 402, recognizing the gesture information contained in the gesture operation;

For example, the user can point to different areas of the two maps, thereby indicate a search area of a first map to be fused and a corresponding area of a second map to be fused.

At block 403, the search area of the first map is determined from the at least two maps based on the gesture information and the map display area.

In some embodiments, the electronic device can recognize gesture pointing of the gesture operation on the map display area, determine the first map from the at least two maps based on the gesture pointing, and determine the search area based on a position of the gesture pointing corresponding on the first map.

At block 404, determining the second map from the at least two maps excluding the first map.

At block 405, determining the corresponding area of the search area in the second map, and the second map including second sampling points.

Similar to the above embodiment, the electronic device can not only automatically determine the corresponding area in the second map and the second map, but also determine the corresponding area in the second map based on the gesture information. For example, the electronic device recognizes that the gesture information includes a first finger pointing and a second finger pointing, the search area and the corresponding area are determined based on a display area corresponding to the two finger pointing.

At block 406, determining target points, from the second sampling points in the corresponding area, having matched attribute information with the first sampling points in the search area, to obtain sampling point matching pairs, and each of the sampling point matching pairs including one of the target points and the first sampling point matched with the one of the target points.

At block 407: fusing, based on the obtained sampling point matching pairs, the first map and the second map to obtain a target fusion map.

In the embodiment of the present disclosure, another method to obtain the search guidance information is provided, that is, obtaining the gesture information based on the gesture operation inputted by the user; and determining the search area of the first map and the first map based on the gesture information, compared with other obtaining methods, this method can guide the electronic device for the map fusion without the touch operation and the voice instruction input. Thus, on the one hand, the map fusion method can be applied to electronic devices without touch screen and voice recognition apparatus, thereby to expand the application scene of the map fusion and reduce the implementation cost of the map fusion; on the other hand, the map fusion method can also be applied to the electronic devices with the failure of the touch screen and/or voice recognition apparatus, thereby the electronic devices can continue map-building and map fusion even in the case of the failure of the touch screen and/or the voice recognition apparatus, thereby to improve the reliability of the map fusion.

As described in the above embodiment, the search guidance information can include the ocular feature information obtained by the electronic device when the user looks at the map display area. Based on this, an embodiment of the present disclosure provides another map fusion method, which can begin from block 501 to block 509.

At block 501, displaying at least two maps in a map display area.

At block 502, obtaining the ocular feature information of the user.

In some embodiments, the ocular feature information may include a viewing direction and a time length of the user's eyeballs stopping rotating in the viewing direction.

At block 503, determining, based on the ocular feature information, a gaze area of the user's eyeballs on the map display area.

In some embodiments, the electronic device can detect rotation and viewing directions of the user's eyeballs by using a line of sight tracker, determine whether the time length of the user's eyeballs stopping rotating in the viewing direction exceeds a certain threshold, and if so, a sub area corresponding to the map display area in the viewing direction is determined as the gaze area.

At block 504, determining the first map from the at least two maps based on the gaze area.

At block 505, determining the search area based on a position of the gaze area on the first map.

At block 506, determining a second map from the at least two maps excluding the first map.

At block 507, determining a corresponding area of the search area in the second map, and the second map including second sampling points.

Similar to the above embodiment, the electronic device can not only automatically determine the corresponding area on the second map and the second map, but also determine the corresponding area on the second map and the second map based on another viewing direction contained in the ocular feature information and the time length when the user's eye stops rotating in another viewing direction.

At block 508, determining target points, from the second sampling points in the corresponding area, having matched attribute information with the first sampling points in the search area, to obtain sampling point matching pairs, and each of the sampling point matching pairs including one of the target points and the first sampling point matched with the one of the target points.

At block 509, fusing, based on the obtained sampling point matching pairs, the first map and the second map to obtain a target fusion map.

In the embodiment of the present disclosure, another method to obtain the search guidance information is provided, that is, determining the search area of the first map and the first map based on the ocular feature information of the user, compared with other obtaining methods, this method can guide the electronic device for the map fusion without user touch operation, voice instruction input or gesture operation. In this way, the map fusion method can be applied to electronic devices with the line of sight tracker, thereby to expand the application scene of the map fusion.

In an embodiment of the present disclosure, the electronic device can perform the map fusion based on any one of the above methods to obtain the search guidance information. Users can choose which input method to use to guide the electronic device for the map fusion. For example, the user selects to guide the electronic device to determine the search area of the first map and the corresponding area of the second map through the touch operation, the voice instruction, the gesture operation or the eye operation.

An embodiment of the present disclosure further provides a map fusion method, which may begin from block 601 to block 606.

At block 601, determining, based on obtained search guidance information, a search area of a first map from currently displayed at least two maps, and the first map including first sampling points.

At block 602, determining a second map from the at least two maps excluding the first map.

At block 603, determining a corresponding area of the search area in the second map, and the second map including second sampling points.

At block 604, determining target points, from the second sampling points in the corresponding area, having matched attribute information with the first sampling points in the search area, to obtain sampling point matching pairs, and each of the sampling point matching pairs including one of the target points and the first sampling point matched with the one of the target points.

At block 605, preliminarily fusing the first map with the second map to obtain an initial fusion map.

It can be understood that the preliminary fusing, such as blocks 705 to 707 of the following embodiment, generally unifying the coordinates of the sampling points in the first map and the coordinates of the sampling points in the second map into one coordinate system, and then simply combining to obtain a union set, that is, the initial fusion map.

At block 606, fusing attribute information of each of the sampling point matching pairs in the initial fusion map into attribute information of one sampling point, thereby obtaining the target fusion map.

It should be noted that coordinates in the attribute information of the target points in the initial fusion map are converted coordinates, and coordinates in the attribute information of the first sampling points are also converted coordinates.

An embodiment of the present disclosure further provides a map fusion method, which may begin from block 701 to block 709.

At block 701, determining, based on obtained search guidance information, a search area of a first map from currently displayed at least two maps. The first map includes first sampling points.

At block 702, determining a second map from the at least two maps excluding the first map.

At block 703, determining a corresponding area of the search area in the second map. The second map includes second sampling points.

At block 704, determining target points, from the second sampling points in the corresponding area, having matched attribute information with the first sampling points in the search area, to obtain sampling point matching pairs. Each of the sampling point matching pairs includes one of the target points and the first sampling point matched with the one of the target points.

At block 705, converting local coordinates of the first sampling points in the first map to a global coordinate system to obtain initial global coordinates of the first sampling points.

At block 706, converting local coordinates of the second sampling points in the second map to the global coordinate system to obtain initial global coordinates of the second sampling points.

At block 707, combining the initial global coordinates of each of the first sampling points and the initial global coordinates of each of the second sampling points to obtain the initial fusion map.

In some embodiments, the electronic device can also obtain the initial fusion map by determining a coordinate conversion relationship between a reference coordinate system of the first map and a reference coordinate system of the second map; converting, based on the coordinate conversion relationship, local coordinates of the first sampling points in the first map into initial global coordinates, by taking the reference coordinate system of the second map as a global coordinate system; and adding the initial global coordinates of each of the first sampling points into the second map to obtain the initial fusion map.

At block 708, optimizing the initial global coordinates of the first sampling point in each of the sampling point matching pairs to obtain target global coordinates.

In some embodiments, a reprojection error of the first sampling point is determined based on the initial global coordinates of the first sampling point and the initial global coordinates of the matched target point, the initial global coordinates of the first sampling point in each of the sampling point matching pairs is iteratively adjusted until the reprojection error of the first sampling point is less than or equal to a specified threshold, and inputted global coordinates of the first sampling point in a last iterative adjusting are determined as the target global coordinates.

In the implementation, the electronic device can use the Levenberg-Marquardtalgorithm (LM) algorithm for the iteration to determine the optimal target global coordinates.

At block 709, fusing global coordinates of each of the target points in the initial fusion map and the target global coordinates of the matched first sampling point into global coordinates of one sampling point, and thereby obtaining the target fusion map.

For example, in the initial fusion map, a sampling point 1 and a sampling point 2 are the sampling point matching pair, the electronic device can fuse the global coordinates of these two points into the global coordinates of one sampling point (called a sampling point 12). A sampling point 3 and a sampling point 4 are the sampling point matching pair, and the electronic device can fuse the global coordinates of these two points into the global coordinates of one sampling point (called a sampling point 34). A sampling point 5 and a sampling point 6 are the sampling point matching pair, and the electronic device can fuse the global coordinates of these two points into the global coordinates of one sampling point (called a sampling point 56). The global coordinates of the sampling point 12, the global coordinates of the sampling point 34 and the global coordinates of the sampling point 56 are added to the initial fusion map, and the sampling points 1 to 6 in the initial fusion map are eliminated to obtain the target fusion map.

In the embodiment of the disclosure, after obtaining the initial fusion map, it is necessary to optimize the initial global coordinates of the first sampling points matched with the target points to obtain the target global coordinates; fuse the global coordinates of each target point and the target global coordinates of the matched first sampling point into the global coordinates of one sampling point. In this way, the reprojection error of the first sampling point can be reduced, thereby to reduce the interleaving offset at the fusion position after the map fusion.

Observation data (such as captured images and point cloud data) of a surrounding environment are collected through a sensor to track and match the collected observation data. Performing triangulation based on relationships among the observation data to generate spatial three-dimensional point cloud and build incremental maps. The map fusion is to extract key frames of a plurality of maps, match the key frames, associate the two maps that exceed a threshold of matching frames, and fuse the two maps into one map. However, this requires not only traversing all the maps to find the two maps with the most overlapping areas, but also traversing each sampling point in the key frame, thus the calculation amount is quite large, which affects the real-time performance of the map fusion.

On the other hand, in terms of fusion accuracy, there is usually a lack of optimization, resulting in offset in the map fusion. Moreover, due to the huge calculation amount, the map fusion can only run on a server. If a terminal device is not connected to the Internet or in a private area, it is impossible to build maps and fuse map models.

Based on this, an application of an embodiment of the present disclosure in an actual application scene will be described below.

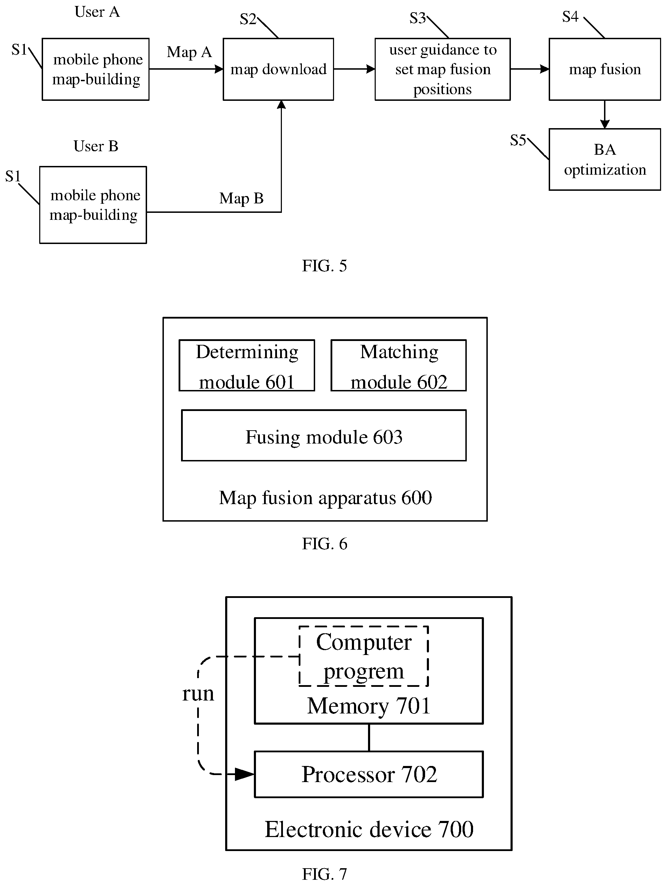

An embodiment of the disclosure provides a solution of multi-map fusion, which can build maps at a plurality of mobile terminals at the same time, and map fusion can be carried out at any one of the plurality of mobile terminals that has successfully built the map. Moreover, the error of the map fusion is reduced through user guidance and map optimization. A specific implementation solution is shown in FIG. 5, which can begin from block S1 to block S5.

At block S1, building a map by using the simultaneous localization and mapping (SLAM) technology. A SLAM module is run at a mobile terminal. The SLAM module extracts oriented features from accelerated segment test (FAST) and rotated binary robust independent elementary features (BRIEF) features (ORB features) from video frame sequences obtained by a camera, and then generates three-dimensional point cloud after performing feature matching, tracking and triangulation.

In some embodiments, the mobile terminal will select some frames from the video frame sequences as key frames, which are snapshots of a real scene at different posts. Each of the key frames includes an observation relationship between post information and map point cloud. These key frames constitute vertices of a post map, and a connection among them constitutes an edge of the post map. The number of map points shared between the two key frames is a weight of this edge. The ORB features combines a FAST feature point detection method with a BRIEF feature descriptor, and improves and optimizes them on their original basis. ORB algorithm proposes to use a moment method to determine a direction of FAST feature points. In other words, a center of mass of the feature points within a radius of r is calculated through the moment, and coordinates of the feature point to the center of mass forms a vector as the direction of the feature point.

A. feature matching

Because the image deformation is not considered, the matching process is sensitive to motion blur and camera rotation, thus a motion state of the user is strictly required in an initialization process. The post of the previous image is used to guide the data association process, and can help to extract visible submaps from the current map, thereby to reduce the computational overhead of blindly projecting the whole map. In addition, it can also provide a priori for the post of the current image, the feature matching can only search in a small area, not the whole image. Then matching relationships between local map points and current feature points are established.

B. triangulation

The purpose of the triangulation is to solve the three-dimensional coordinates of spatial points corresponding to image frames. Triangulation was first proposed by Gauss and applied to surveying. To put it simply: observing the same three-dimensional point P (x, y, z) at different positions, knowing the two-dimensional projection points X1 (x1, y1) and X2 (x2, y2) of the three-dimensional points observed at the different positions, and recovering the depth information Z of the three-dimensional points by using the triangular relationship.

C. generation of 3D point cloud (i.e., map before fusion)

Saving the spatial point coordinate information, post information and other parameters obtained after the triangulation into point cloud format, and updating the point cloud file in real time.

At block S2, map upload and download

The mobile devices are connected through wireless local area network (Wi-Fi), and each mobile device has a device ID. The mobile devices can be connected through the device IDs. The user can trigger to download the map of the specific mobile device, or upload the local map to any mobile device.

At block S3, user guidance to set map fusion positions

At present, the mobile terminal of user A builds map map-A by map-building. After block S2, the map-B built by the mobile terminal of user B is downloaded. The map-A and the map-B can be visualized through the mobile terminal. The map-A and map-B are connected together by user A clicking on a joint of the maps, and a "coarse" fusion model is generated.

At block S4, map fusion

After transforming the coordinate transformation parameters of the two maps, the two maps can be unified into the same coordinate system. Next, describe the process of fusing the two maps:
In the same map, there is a connection between the key frames and the map points, that is, which the map points can be observed on the key frame and in which the key frames the map point appears. Only unifying the two map coordinate systems cannot really fuse the two maps. The key frames and the map points of the two maps are not related to each other. Therefore, a key of the map fusion is to associate the key frames in the new (old) map with the map points in the old (new) map. The matched points between the two maps have been obtained through search matching, and the map points of the map are used to replace the map points of the new map. Accordingly, the key frames associated with the new map points in the original new map will be transformed into the old map points in the matched points, thereby to achieve the purpose of map fusion. After the map fusion, in a subsequent tracking map-building, the key frames and the map point information of the two maps will be used for optimization at the same time.

At block S5, bundle adjustment (BA) optimization

BA is essentially an optimization model, whose purpose is to minimize the reprojection error, while the purpose of BA optimization is to reduce the interleaving offset at the fusion after map fusion.
BA optimization is mainly calculated by LM algorithm and the sparsity of the BA model. LM algorithm is a combination of steepest descent method (gradient descent method) and Gauss Newton. The gradient descent method is to iterate along the negative direction of the gradient to find the variable value that minimizes the function.
The embodiment of the disclosure provides the solution of the multi-map fusion, which can build the maps at the mobile terminals at the same time, or perform map fusion at any mobile terminal that has successfully built maps. This method improves the efficiency and real-time of map-building. In addition, the method of local BA at the fusion position is introduced to improve the accuracy of the map fusion, and there will be no staggered offset at the map fusion. The guidance information of the user is introduced to support the user's manual setting of the initial position of the fusion, which greatly improves the success rate of the model fusion.
The embodiment of the disclosure provides the solution of the multi-map fusion, and solves the problems of map-building efficiency, real-time performance and accuracy of map fusion at the same time. The mobile devices build maps at the same time to improve the efficiency and real-time of building maps. The local BA method at the fusion position is introduced to improve the accuracy of map fusion. Introducing the guidance information of the user, supporting the user to manually set the fusion position, and improving the success rate of the map fusion.
In some embodiments, map-building and map fusion can also be performed on the cloud or edge computing server side. Among them, 1. it is necessary to build a cloud server or an edge computing server; 2. real time map-building and fusion; 3. interaction between mobile data and cloud data.
Based on the above embodiment, an embodiment of the present disclosure provides a map fusion apparatus, which includes all modules and can be realized by a processor in an electronic device. Of course, It can also be realized through specific logic circuits. In the process of implementation, the processor can be central processing unit (CPU), microprocessor (MPU), digital signal processor (DSP) or field programmable gate array (FPGA).
FIG. 6 illustrates a schematic structural view of a map fusion apparatus according to an embodiment of the present disclosure. As shown in FIG. 6, the map fusion apparatus 600 may include a determining module 601, a matching module 602, and a fusing module 603.
The determining module 601 is configured to: determine, based on obtained search guidance information, a search area of a first map from currently displayed at least two maps; the first map including first sampling points; determine a second map from the at least two maps excluding the first map, determining a corresponding area of the search area in the second map; and the second map including second sampling points.
The matching module 602 is configured to: determine target points, from the second sampling points in the corresponding area, having matched attribute information with the first sampling points in the search area, to obtain sampling point matching pairs, and each of the sampling point matching pairs including one of the target points and the first sampling point matched with the one of the target points.
The fusing module 603 is configured to: fuse, based on the obtained sampling point matching pairs, the first map and the second map to obtain a target fusion map.
In some embodiments, the determining module 601 is configured to: determine, based on the search guidance information, the corresponding area in the second map from the at least two maps excluding the first map.

In some embodiments, the search guidance information includes a first touch area corresponding to a touch operation, the determining module 601 is configured to: display the at least two maps in a map display area; receive the touch operation in the map display area; determine, based on the first touch area corresponding to the touch operation, the first map from the at least two maps; and determine, based on a position of the first touch area on the first map, the search area.

In some embodiments, the search guidance information includes a second touch area corresponding to the touch operation, the determining module 601 is configured to: determine, based on the second touch area corresponding to the touch operation, the second map from the at least two maps excluding the first map; and determine, based on a position of the second touch area on the second map, the corresponding area.

In some embodiments, the search guidance information includes a voice instruction, the determining module 601 is configured to: display the at least two maps and labeling information in a map display area; the labeling information being configured to label different display sub areas; receive the voice instruction; determine, based on a first display sub area labeled by labeling information in the voice instruction, the first map from the at least two maps; and determine, based on a position of the first display sub area on the first map, the search area.

In some embodiments, the search guidance information includes gesture information, the determining module 601 is configured to: display the at least two maps in a map display area; recognize the gesture information contained in a gesture operation; and determine, based on the gesture information and the map display area, the search area of the first map from the at least two maps.

In some embodiments, the search guidance information includes ocular feature information, the determining module 601 is configured to: display the at least two maps in a map display area; obtain the ocular feature information of a user; determine, based on the ocular feature information, a gaze area of eyeballs of the user on the map display area; determine, based on the gaze area, the first map from the at least two maps; and determine, based on a position of the gaze area on the first map, the search area.

In some embodiments, the fusing module 603 is configured to: preliminarily fuse the first map with the second map to obtain an initial fusion map; and fuse attribute information of each of the sampling point matching pairs in the initial fusion map into attribute information of one sampling point, thereby obtain the target fusion map.

In some embodiments, the fusing module 603 is configured to: convert local coordinates of the first sampling points in the first map to a global coordinate system to obtain initial global coordinates of the first sampling points; convert local coordinates of the second sampling points in the second map to the global coordinate system to obtain initial global coordinates of the second sampling points; and combine the initial global coordinates of each of the first sampling points and the initial global coordinates of each of the second sampling points to obtain the initial fusion map.

In some embodiments, the fusing module 603 is configured to: determine a coordinate conversion relationship between a reference coordinate system of the first map and a reference coordinate system of the second map; convert, based on the coordinate conversion relationship, coordinates of the first sampling points in the first map into initial global coordinates, by taking the reference coordinate system of the second map as a global coordinate system; and fuse the initial global coordinates of each of the first sampling points into the second map to obtain the initial fusion map.

In some embodiments, the fusing module 603 is configured to: optimize the initial global coordinates of the first sampling point in each of the sampling point matching pairs to obtain target global coordinates; and fuse global coordinates of each of the target points in the initial fusion map and the target global coordinates of the matched first sampling point into global coordinates of one sampling point, and thereby obtain the target fusion map.

In some embodiments, the fusing module 603 is configured to: determine, based on the initial global coordinates of the first sampling point and the initial global coordinates of the matched target point, a reprojection error of the first sampling point; and iteratively adjust the initial global coordinates of the first sampling point in each of the sampling point matching pairs until the reprojection error of the first sampling point is less than or equal to a specific threshold, and determine inputted global coordinates of the first sampling point in a iterative adjusting as the target global coordinates.

The description of the above apparatus embodiments is similar to the description of the above method embodiments, and has the same beneficial effect as the method embodiments. For the technical details not disclosed in the apparatus embodiments of the present disclosure, please refer to the description of the method embodiments of the present disclosure.

It should be noted that, in the embodiments of the present disclosure, if the above map fusion methods are realized in the form of software function module and sold or used as an independent product, can also be stored in a non-transitory computer readable storage medium. Based on this understanding, the technical solutions of the embodiments of the present disclosure in essence or the part that contributes to the related art can be embodied in the form of software products, the computer software products are stored in a storage medium including several instructions to enable electronic devices (which can be mobile phones, tablets, laptops, desktop computers, robots, UAVs, etc.) to perform all or part of the methods described in various embodiments of the present disclosure. The aforementioned storage medium include: USB flash disk, mobile hard disk, read only memory (ROM), magnetic disc or optical disc and other medium that can store program code. Thus, the embodiments of the present disclosure are not limited to any specific combination of hardware and software.

Correspondingly, an embodiment of the present disclosure provides an electronic device, FIG. 7 illustrates a schematic flowchart of a hardware entity of the electronic device according to an embodiment of the present disclosure, as shown in FIG. 7, the hardware entity of the electronic device includes: a memory 701 and a processor 702, the memory 701 is stored with a computer program executable by the processor 702, the processor 702 is configured to, when executes the computer program, implement the map fusion method provided in the above embodiments of present disclosure.

The memory 701 is configured to store instructions and applications executable by the processor 702, and can also cache data (e.g., image data, audio data, voice communication data and video communication data) to be processed or processed by the processor 702 and each module in the electronic device 700, which can be realized by flash or random access memory (RAM).

Correspondingly, an embodiment of the present disclosure provides a non-transitory computer readable storage medium storing a computer program. When the computer program is executed by a processor to realize the blocks in the map fusion method provided in the above embodiments.

An embodiment of the present disclosure provides a chip, which includes a processor configured to call and run a computer program from a memory to make a device installed with the chip can execute the blocks in the map fusion method provided in the above embodiments.

It should be pointed out here that the above description of the embodiments of storage medium, chip and terminal device is similar to the description of the above method embodiments, and has the same beneficial effect as the method embodiments. For the technical details not disclosed in the embodiments of the storage medium, chip and terminal device of the present disclosure, please refer to the description of the method embodiments of the present disclosure.

It should be understood that, reference throughout this specification to "an embodiment", "one embodiment" or "some embodiments" means that a particular feature, structure, or characteristics described in connection with the embodiment is included in at least one embodiment of the present disclosure. Thus, the appearances of the "in one embodiment", "in an embodiment", or "in some embodiments" throughout this specification are not necessarily referring to the same embodiment of the present disclosure. Furthermore, the particular features, structures, or characteristics may be combined in any suitable manner in one or more embodiments. It should be understood that in various embodiments of the present disclosure, the magnitude of the sequence number of the above processes does not mean the order of execution. The execution order of each process should be determined by its function and internal logic, and should not constitute any limitation on the implementation process of the embodiments of the present disclosure. The above serial number of the embodiments of the present disclosure is only for description and does not represent the advantages and disadvantages of the embodiments.

The above description of various embodiments tends to emphasize the differences between various embodiments, and their similarities or similarities can be referred to each other. For the sake of brevity, it will not be repeated here.

The term "and/or" in this paper is only an association relationship describing the associated object, which means that there can be three kinds of relationships, such as object A and/or object B. It can mean that object A exists alone, object A and object B exist at the same time, and object B exists alone.

It should be noted that in this paper, the terms "include", "contain" or any other variation thereof are intended to cover nonexclusive inclusion, so that a process, method, material or device including a series of elements includes not only those elements, but also other elements not explicitly listed, or elements inherent in such process, method, material or device. Without further restrictions, the element defined by the statement "including a..." does not exclude the existence of another same element in the process, method, material or device including the element.

In several embodiments provided in the present disclosure, it should be understood that the disclosed devices and methods can be realized in other ways. The embodiment of the touch screen system described above is only schematic. For example, the division of the modules is only a logical function division, and there can be another division method in actual implementation, such as multiple modules or components can be combined or integrated into another system, or some features can be ignored or not executed. In addition, the coupling, direct coupling or communication connection among the components shown or discussed can be through some interfaces, indirect coupling or communication connection of devices or modules can be electrical, mechanical or other forms.

The modules described above as separate components can be or may not be physically separated, and the components displayed as the modules can be or may not be physical modules; which can be located in one place or distributed to multiple network units; some or all of the modules can be selected according to the actual needs to achieve the purpose of the embodiments.

In addition, the functional modules in the embodiments of the present disclosure can be all integrated in one processing unit, or each module can be used as a unit separately, or two or more modules can be integrated in one unit; the above integrated modules can be realized in the form of hardware or hardware plus software functional units.

Those skilled in the art can understand that all or part of the blocks of realizing the above method embodiments can be completed by the hardware related to the program instruction, the above program can be stored in the computer readable storage medium, and the blocks including the above method embodiments are executed when the program is executed. The above storage medium include mobile storage devices, read only memory (ROM), magnetic discs or optical discs and other medium that can store program codes.

Alternatively, if the above integrated unit of the present disclosure is realized in the form of software function module and sold or used as an independent product, it can also be stored in a computer readable storage medium. Based on this understanding, the technical solutions of the embodiments of the present disclosure in essence or the part that contributes to the related art can be embodied in the form of software products, the computer software products are stored in a storage medium including several instructions to enable electronic devices (which can be mobile phones, tablets, laptops, desktop computers, robots, UAVs, etc.) to perform all or part of the methods described in various embodiments of the present disclosure. The aforementioned storage medium include: mobile storage device, ROM, magnetic disc or optical disc and other media that can store program code.

The methods disclosed in the several method embodiments provided in the present disclosure can be combined arbitrarily without conflict to obtain a new method embodiment.

The features disclosed in several product embodiments provided by the present disclosure can be combined arbitrarily without conflict to obtain a new product embodiment.

The features disclosed in several method or device embodiments provided in the present disclosure can be combined arbitrarily without conflict to obtain a new method embodiment or device embodiment.

The above descriptions are only the embodiments of the present disclosure, but the protection scope of this present disclosure is not limited to this. Those skilled in the art who can easily think of replacements or amendments within the technical scope disclosed in this present disclosure shall be covered by the protection scope of this present disclosure. Therefore, the protection scope of the present disclosure shall be subject to the protection scope of the claims.

**Claims**

1. A map fusion method, comprising:

   determining, based on obtained search guidance information, a search area of a first map from currently displayed at least two maps; wherein the first map comprises first sampling points;
   determining a second map from the at least two maps excluding the first map and determining a corresponding area of the search area in the second map; wherein the second map comprises second sampling points;
   determining target points, from the second sampling points in the corresponding area, having matched attribute information with the first sampling points in the search area, to obtain sampling point matching pairs, wherein each of the sampling point matching pairs comprises one of the target points and the first sampling point matched with the one of the target points; and
   fusing, based on the obtained sampling point matching pairs, the first map and the second map to obtain a target fusion map.

2. The method according to claim 1, wherein the determining a second map from the at least two maps excluding the first map and determining a corresponding area of the search area in the second map, comprises:
   determining, based on the search guidance information, the corresponding area in the second map from the at least two maps excluding the first map.

3. The method according to claim 1, wherein the search guidance information comprises a first touch area corresponding to a touch operation; and the determining, based on obtained search guidance information, a search area of a first map from currently displayed at least two maps, comprises:

   displaying the at least two maps in a map display area;
   receiving the touch operation in the map display area;
   determining, based on the first touch area corresponding to the touch operation, the first map from the at least two maps; and
   determining, based on a position of the first touch area on the first map, the search area.

4. The method according to claim 3, wherein the determining, based on a position of the first touch area on the first map, the search area, comprises:
   determining an area, corresponding to the first touch area, on the first map as the search area.

5. The method according to claim 3, wherein the search guidance information comprises a second touch area corresponding to the touch operation; and the determining a second map from the at least two maps excluding the first map and determining a corresponding area of the search area in the second map comprises:

> determining, based on the second touch area corresponding to the touch operation, the second map from the at least two maps excluding the first map; and
> determining, based on a position of the second touch area on the second map, the corresponding area.

6. The method according to claim 1, wherein the search guidance information comprises a voice instruction; and the determining, based on obtained search guidance information, a search area of a first map from currently displayed at least two maps comprises:

> displaying the at least two maps and labeling information in a map display area; wherein the labeling information are configured to label different display sub areas;
> receiving the voice instruction;
> determining, based on a first display sub area labeled by labeling information in the voice instruction, the first map from the at least two maps; and
> determining, based on a position of the first display sub area on the first map, the search area.

7. The method according to claim 1, wherein the search guidance information comprises gesture information; and the determining, based on obtained search guidance information, a search area of a first map from currently displayed at least two maps comprises:

> displaying the at least two maps in a map display area;
> recognizing the gesture information contained in a gesture operation; and
> determining, based on the gesture information and the map display area, the search area of the first map from the at least two maps.

8. The method according to claim 1, wherein the search guidance information comprises ocular feature information; and the determining, based on obtained search guidance information, a search area of a first map from currently displayed at least two maps comprises:

> displaying the at least two maps in a map display area;
> obtaining the ocular feature information of a user;
> determining, based on the ocular feature information, a gaze area of eyeballs of the user on the map display area;
> determining, based on the gaze area, the first map from the at least two maps; and
> determining, based on a position of the gaze area on the first map, the search area.

9. The method according to any one of claims 1-8, wherein the fusing, based on the obtained sampling point matching pairs, the first map and the second map to obtain a target fusion map, comprises:

> preliminarily fusing the first map with the second map to obtain an initial fusion map; and
> fusing attribute information of each of the sampling point matching pairs in the initial fusion map into attribute information of one sampling point, thereby obtaining the target fusion map.

10. The method according to claim 9, wherein the preliminarily fusing the first map with the second map to obtain an initial fusion map, comprises:

> converting local coordinates of the first sampling points in the first map to a global coordinate system to obtain initial global coordinates of the first sampling points;
> converting local coordinates of the second sampling points in the second map to the global coordinate system to obtain initial global coordinates of the second sampling points; and
> combining the initial global coordinates of the first sampling points and the initial global coordinates of the second sampling points to obtain the initial fusion map.

11. The method according to claim 9, wherein the preliminarily fusing the first map with the second map to obtain an initial fusion map, comprises:

determining a coordinate conversion relationship between a reference coordinate system of the first map and a reference coordinate system of the second map;

converting, based on the coordinate conversion relationship, local coordinates of the first sampling points in the first map into initial global coordinates, by taking the reference coordinate system of the second map as a global coordinate system; and

fusing the initial global coordinates of the first sampling points into the second map to obtain the initial fusion map.

12. The method according to claim 10 or 11, wherein the fusing attribute information of each of the sampling point matching pairs in the initial fusion map into attribute information of one sampling point, thereby obtaining the target fusion map, comprises:

optimizing the initial global coordinates of the first sampling point in each of the sampling point matching pairs to obtain target global coordinates; and

fusing global coordinates of each of the target points in the initial fusion map and the target global coordinates of the matched first sampling point into global coordinates of the one sampling point, and thereby obtaining the target fusion map.

13. The method according to claim 12, wherein the optimizing the initial global coordinates of the first sampling point in each of the sampling point matching pairs to obtain target global coordinates, comprises:

determining, based on the initial global coordinates of the first sampling point and the initial global coordinates of the matched target point, a reprojection error of the first sampling point; and

iteratively adjusting the initial global coordinates of the first sampling point in each of the sampling point matching pairs until the reprojection error of the first sampling point is less than or equal to a specified threshold, and determining inputted global coordinates of the first sampling point in a last iterative adjusting as the target global coordinates.

14. A map fusion apparatus, comprising:

a determining module, configured to determine, based on obtained search guidance information, a search area of a first map from currently displayed at least two maps; the first map comprising first sampling points; determine a second map from the at least two maps excluding the first map and determining a corresponding area of the search area in the second map; and the second map comprising second sampling points;

a matching module, configured to determine target points, from the second sampling points in the corresponding area, having matched attribute information with the first sampling points in the search area, to obtain sampling point matching pairs, and each of the sampling point matching pairs comprising one of the target points and the first sampling point matched with the one of the target points; and

a fusing module, configured to fuse, based on the obtained sampling point matching pairs, the first map and the second map to obtain a target fusion map.

15. The map fusion apparatus according to claim 14, wherein the determining module is configured to:
determine, based on the search guidance information, the corresponding area in the second map from the at least two maps excluding the first map.

16. The map fusion apparatus according to claim 14, wherein the search guidance information comprises a first touch area corresponding to a touch operation; and the determining module is configured to:

display the at least two maps in a map display area;

receive the touch operation in the map display area;

determine, based on the first touch area corresponding to the touch operation, the first map from the at least two maps; and

determine, based on a position of the first touch area on the first map, the search area.

17. The map fusion apparatus according to any one of claims 14-16, wherein the fusing module is configured to:

convert local coordinates of the first sampling points in the first map to a global coordinate system to obtain initial global coordinates of the first sampling points;

convert local coordinates of the second sampling points in the second map to the global coordinate system to obtain initial global coordinates of the second sampling points;

combine the initial global coordinates of the first sampling points and the initial global coordinates of the second sampling points to obtain the initial fusion map; and

fuse attribute information of each of the sampling point matching pairs in the initial fusion map into attribute information of one sampling point, thereby obtain the target fusion map.

18. An electronic device, comprising: a memory and a processor, wherein the memory is stored with a computer program executable by the processor, and the processor is configured to, when executes the computer program, implement the map fusion method according to any one of claims 1 to 13.

19. A non-transitory computer readable storage medium, wherein the non-transitory computer readable storage medium is stored with a computer program, and the computer program is configured to, when being executed by a processor, implement the map fusion method according to any one of claims 1 to 13.

20. A chip, comprising: a processor configured to call and run a computer program from a memory to make a device installed with the chip execute the map fusion method according to any one of claims 1 to 13.

determining, based on obtained search guidance information, a search area of a first map from currently displayed at least two maps, and the first map including first sampling points — 101

determining a second map from the at least two maps excluding the first map — 102

determining a corresponding area of the search area in the second map, and the second map including second sampling points — 103

determining target points, from the second sampling points in the corresponding area, having matched attribute information with the first sampling points in the search area, to obtain sampling point matching pairs, and each of the sampling point matching pairs including one of the target points and the first sampling point matched with the one of the target points — 104

fusing, based on the obtained sampling point matching pairs, the first map and the second map to obtain a target fusion map — 105

FIG. 1

FIG. 2

FIG. 3

FIG. 4

User A

S1 ⟍ mobile phone map-building

Map A →

S2 ⟍ map download

→ S3 ⟍ user guidance to set map fusion positions

→ S4 ⟍ map fusion

↓

S5 ⟍ BA optimization

User B

S1 ⟍ mobile phone map-building

Map B →

FIG. 5

Determining module 601

Matching module 602

Fusing module 603

Map fusion apparatus 600

FIG. 6

Computer progrem

Memory 701

run

Processor 702

Electronic device 700

FIG. 7

## INTERNATIONAL SEARCH REPORT

| | International application No. |
|---|---|
| | **PCT/CN2020/125837** |

**A.    CLASSIFICATION OF SUBJECT MATTER**

G01C 21/32(2006.01)i

According to International Patent Classification (IPC) or to both national classification and IPC

**B.    FIELDS SEARCHED**

Minimum documentation searched (classification system followed by classification symbols)

G01C, G05D, G06F

Documentation searched other than minimum documentation to the extent that such documents are included in the fields searched

Electronic data base consulted during the international search (name of data base and, where practicable, search terms used)

CNABS, CNTXT, DWPI, SIPOABS, USTXT, WOTXT; 地图, 点云, 拼接, 融合, 合并, 合成, 组合, 框选, 点选, 选择, 触摸, 区域, 地区, 重叠, 重合, 匹配, 比较, map+, point, cloud, match+, compar+, fus+, combin+, superposition, select+, area, region

**C.    DOCUMENTS CONSIDERED TO BE RELEVANT**

| Category* | Citation of document, with indication, where appropriate, of the relevant passages | Relevant to claim No. |
|---|---|---|
| PX | CN 110986969 A (GUANGDONG OPPO MOBILE TELECOMMUNICATIONS CORP., LTD.) 10 April 2020 (2020-04-10)<br>claims 1-16, description paragraphs 0003-0204, figures 1-7 | 1-20 |
| X | CN 108827249 A (GOERTEK INC.) 16 November 2018 (2018-11-16)<br>description, paragraphs 0025-0090, figures 1-4 | 1-20 |
| A | CN 108286976 A (NAVINFO CO., LTD.) 17 July 2018 (2018-07-17)<br>entire document | 1-20 |
| A | CN 109141431 A (BEIJING GREEN VALLEY TECHNOLOGY CO., LTD. et al.) 04 January 2019 (2019-01-04)<br>entire document | 1-20 |
| A | CN 109100730 A (BEIJING NORMAL UNIVERSITY - HONG KONG BAPTIST UNIVERSITY UNITED INTERNATIONAL COLLEGE) 28 December 2018 (2018-12-28)<br>entire document | 1-20 |
| A | CN 106272423 A (HARBIN INSTITUTE OF TECHNOLOGY SHENZHEN GRADUATE SCHOOL) 04 January 2017 (2017-01-04)<br>entire document | 1-20 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2021** | **05 February 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/125837** |

**C.     DOCUMENTS CONSIDERED TO BE RELEVANT**

| Category* | Citation of document, with indication, where appropriate, of the relevant passages | Relevant to claim No. |
|---|---|---|
| A | CN 105488459 A (SAIC MOTOR CORPORATION LIMITED) 13 April 2016 (2016-04-13) entire document | 1-20 |
| A | CN 105260988 A (BAIDU ONLINE NETWORK TECHNOLOGY (BEIJING) CO., LTD.) 20 January 2016 (2016-01-20) entire document | 1-20 |
| A | US 2018066957 A1 (HERE GLOBAL BV.) 08 March 2018 (2018-03-08) entire document | 1-20 |

Form PCT/ISA/210 (second sheet) (January 2015)

**INTERNATIONAL SEARCH REPORT**
Information on patent family members

International application No.

**PCT/CN2020/125837**

| Patent document cited in search report | | | Publication date (day/month/year) | Patent family member(s) | | | Publication date (day/month/year) |
|---|---|---|---|---|---|---|---|
| CN | 110986969 | A | 10 April 2020 | None | | | |
| CN | 108827249 | A | 16 November 2018 | CN | 108827249 | B | 27 October 2020 |
| CN | 108286976 | A | 17 July 2018 | None | | | |
| CN | 109141431 | A | 04 January 2019 | None | | | |
| CN | 109100730 | A | 28 December 2018 | None | | | |
| CN | 106272423 | A | 04 January 2017 | None | | | |
| CN | 105488459 | A | 13 April 2016 | None | | | |
| CN | 105260988 | A | 20 January 2016 | US | 2018253625 | A1 | 06 September 2018 |
| | | | | US | 10628712 | B2 | 21 April 2020 |
| | | | | EP | 3343503 | A4 | 08 August 2018 |
| | | | | KR | 102037820 | B1 | 29 October 2019 |
| | | | | JP | 6664470 | B2 | 13 March 2020 |
| | | | | EP | 3343503 | A1 | 04 July 2018 |
| | | | | CN | 105260988 | B | 05 April 2019 |
| | | | | JP | 2018534603 | A | 22 November 2018 |
| | | | | KR | 20180041176 | A | 23 April 2018 |
| | | | | EP | 3343503 | B1 | 19 February 2020 |
| | | | | WO | 2017041390 | A1 | 16 March 2017 |
| US | 2018066957 | A1 | 08 March 2018 | US | 10359295 | B2 | 23 July 2019 |
| | | | | EP | 3293489 | A1 | 14 March 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911185884